# EUROPÄISCHE PATENTSCHRIFT

(11) **EP 4 121 663 B1**
(45) Veröffentlichungstag und Bekanntmachung des Hinweises auf die Patenterteilung: **17.06.2026**
(21) Anmeldenummer: 21707238.8
(22) Anmeldetag: 19.02.2021
(51) Int. Cl.: C09D 127/16, F16C 33/20

(54) **GLEITLAGERVERBUNDWERKSTOFF UND VERFAHREN ZU SEINER HERSTELLUNG**
PLAIN BEARING COMPOSITE MATERIAL AND PROCESS FOR ITS MANUFACTURING
MATÉRIAU COMPOSITE POUR PALIER LISSE ET PROCÉDÉ POUR SA FABRICATION

(30) Priorität: 25.03.2020 DE 102020108228
(43) Veröffentlichungstag der Anmeldung: 25.01.2023
(73) Patentinhaber: KS Gleitlager GmbH, 68789 St. Leon-Rot (DE)
(72) Erfinder: TAIPALUS, Riitta, 67117 Limburgerhof (DE); REINICKE, Rolf, 76669 Bad Schönborn (DE); WITT, Mario, 69115 Heidelberg (DE)
(74) Vertreter: DREISS Patentanwälte PartG mbB
(86) Internationale Anmeldenummer: PCT/EP2021/054207
(87) Internationale Veröffentlichungsnummer: WO 2021/190841

(56) Entgegenhaltungen:
- EP-A2- 2 889 330
- EP-B1- 3 087 142
- AT-B- 410 471
- DE-A1- 102017 117 736

## Beschreibung

Die vorliegende Erfindung betrifft einen Gleitlagerverbundwerkstoff mit einer metallischen Stützschicht, einer darauf aufgebrachten porösen Trägerschicht, insbesondere aus Bronze, und mit einer eine Gleitfläche für einen Gleitpartner bildenden Gleitschicht aus einem Gleitschichtmaterial auf Polymerbasis, welches in die poröse Trägerschicht einimprägniert ist und einen die Gleitfläche bildenden Überstand über die poröse Trägerschicht bildet, wobei die Polymerbasis des Gleitschichtmaterials PVDF und PTFE umfasst. Das Gleitschichtmaterial kann weitere tribologisch wirksame Füllstoffe, ausgenommen PVDF und PTFE, welche die Polymerbasis bilden, umfassen.

EP 0 232 922 B1 offenbart einen nicht gattungsgemäßen Gleitlagerverbundwerkstoff mit Ausführungsbeispielen, bei denen das Gleitschichtmaterial 55 Vol.-% PTFE bzw. 60 Vol.-% PTFE bzw. 55 Vol.-% PVDF umfasst.

EP 0 632 208 B1 offenbart einen gattungsgemäßen Gleitlagerverbundwerkstoff, wobei das Gleitschichtmaterial aus PTFE und 5-30 Vol.-% metallischem Füllstoff und 5-40 Vol.-% PVDF besteht. Ein Ausführungsbeispiel nennt 70 Vol.-% PTFE, 10 Vol.-% PVDF und 20 Vol.-% Blei.

EP 0 991 869 B1 offenbart einen Gleitlagerverbundwerkstoff mit einem Gleitschichtmaterial auf PTFE-Basis mit wenigstens 60 Vol.-% PTFE, 15-25 Vol.-% eines metallischen Füllstoffs und gegebenenfalls 8-12 Vol.-% PVDF und mit 1-3 Vol.-% Kohlenstofffasern. Das Gleitschichtmaterial ist ausgehend von einer PTFE-Dispersion hergestellt.

EP 1 716 342 B1 offenbart einen Gleitlagerverbundwerkstoff, dessen Gleitschichtmaterial auf PVDF-Basis oder auf PES-Basis oder PPS-Basis oder PA-Basis beruht, wobei das Gleitschichtmaterial im ersten Fall wenigstens 50 Vol.-% PVDF umfasst. Als Füllstoffe sind Zinksulfid, Graphit und Kohlenstofffasern genannt. Die Ausführungsbeispiele offenbaren einen PTFE-Gehalt des Gleitschichtmaterials von 10 Vol-%, wobei PTFE hier als Festschmierstoff, also als Füllstoff der Polymerbasis fungiert. PTFE wird hier als pulverförmiger Füllstoff der Polymerbasis des Gleitschichtmaterials zugegeben.

EP 3 087 142 B1 offenbart einen gattungsgemäßen Gleitlagerverbundwerkstoff, bei dem das Gleitschichtmaterial auf Basis eines thermoplastischen Polymers als Matrixmaterial, insbesondere PA, PVDF, PFA, ETFE, PPA, LCP, PSU, PEI, PEEK, PPS, PESU, mit einem PTFE-Zusatz gebildet ist. Vorzugsweise wird das thermoplastische Matrixmaterial ausgewählt aus der Gruppe PEEK, PPS, PPA und PSU. Der PTFE-Zusatz zu dem Gleitschichtmaterial beträgt zwischen 5 und 50 Vol.-%, insbesondere 15 - 45 Vol.-%, insbesondere 15-35 Vol.-% des Gleitschichtmaterials und weist wenigstens zwei verschiedene Arten von PTFE mit unterschiedlichen Molekulargewichten auf. Nach der Lehre dieser Druckschrift besteht der PTFE-Zusatz aus 5 - 40 Vol.-% und vorzugsweise aus 12,5 - 35 Vol.-% niedermolekularem PTFE und aus entsprechend 60 - 95 Vol.-%, insbesondere aus 65 - 87,5 Vol.-% hochmolekularem PTFE. Niedermolekulares PTFE ist mit einem mittleren Molekulargewicht von < 10⁶ g/mol, und vorzugsweise < 10⁵ g/mol angegeben und hochmolekulares PTFE ist mit einem mittleren Molekulargewicht von > 10⁶ g/mol, insbesondere von 10⁶ bis 10⁷ g/mol angegeben.

DE 198 08 540 A1 und die durch Teilung hervorgegangene EP 2 889 330 A2 betreffen und beschreiben nach einer ersten Variante ein Gleitschichtmaterial, das als Matrixmaterial PTFE oder PTFE in Kombination mit anderen Fluorthermoplasten, deren Schmelzpunkt über 260 °C liegt, enthält, und lehrt weiter, dass 10-50 Vol.-% Polyamid enthalten sind. In diesem Zusammenhang ist eine Herstellung ausgehend von einer PTFE-Dispersion genannt. Nach einer zweiten Variante des Gleitschichtmaterials ist das Matrixmaterial aus einem nicht PTFE aufweisenden Kunststoff gebildet, in das PTFE oder PTFE in Kombination mit anderen Fluorthermoplasten eingelagert ist. Als Matrixmaterial ist PPS, PA, PVDF, PSU, PES, PEI, PEEK und/oder PI genannt. Der Anteil des Matrixmaterials beträgt 60-95 Vol.-%, und ferner sind wie bei der ersten Variante 10-50 Vol.-% Polyaramid enthalten. Bei dieser zweiten Variante werden die Komponenten als Pulver bereitgestellt und gemischt und sodann die thermoplastische Matrixkomponente erschmolzen.

DE 10 2017 117 736 A1 betrifft einen PTFE-Basis Werkstoff mit PTFE-Anteil von 75 und 80 Vol.-% und mit verschleißmindernden Füllstoffen, insbesondere Bariumsulfat, Aramid, Polyimid und weitere Fluorthermoplaste außer PTFE.

AT 410 471 B beschreibt einen Gleitlagerverbundwerkstoff mit einem Gleitschichtmaterial mit 60-95 Vol.-% PVDF und Rest PTFE oder PTFE und weitere Komponenten mit einer Dichte < 7 g/cm³, wobei dieser Rest 40 Vol.-% nicht übersteigen soll. Das Herstellungsverfahren sieht vor, dass eine Pulvermischung dieser Komponenten auf das metallische Trägermaterial aufgestreut und anschließend bis über den Erweichungspunkt des PVDF-Anteils zur Ausbildung der Gleitschicht erwärmt wird und danach die Gleitschicht glattgewalzt wird.

Der vorliegenden Erfindung liegt die Aufgabe zugrunde, einen gattungsgemäßen Gleitlagerverbundwerkstoff noch weitergehend im Hinblick auf seine tribologischen Eigenschaften, nämlich Reibung und Verschleiß, zu verbessern.

Diese Aufgabe wird bei einem Gleitlagerverbundwerkstoff der genannten Art erfindungsgemäß dadurch gelöst, dass das Gleitschichtmaterial 30 - 60 Vol.% PTFE und 40 - 70 Vol.-% PVDF umfasst, und dass das Gleitschichtmaterial ausgehend von einer PTFE-Dispersion mit einem Molekulargewicht von PTFE > 5*10⁶ g/mol gebildet wurde, welcher pulverförmiges PVDF und die gegebenenfalls vorgesehenen Füllstoffe zugesetzt wurden, wobei das PTFE dann ausgefällt und eine flüssige Phase der Dispersion abgetrennt wurde und ein das ausgefällte PTFE, das PVDF und die gegebenenfalls zugesetzten Füllstoffe umfassendes verbleibendes Gemisch zur Bildung des Gleitschichtmaterials in die poröse Trägerschicht einimprägniert und unter Zufuhr von Wärme darin fixiert wurde. Bei der PTFE Dispersion handelt es sich vorzugsweise um eine wässrige Dispersion.

Im Rahmen von Entwicklungsbemühungen hat sich herausgestellt, dass sich die tribologischen Eigenschaften eines Gleitlagerverbundwerkstoffs bei gleicher Zusammensetzung spürbar unterscheiden, und zwar je nach Herstellung des Gleitschichtmaterials. Die Erfinder haben festgestellt, dass bei dem erfindungsgemäßen Gleitlagerverbundwerkstoff, bei dem das Gleitschichtmaterial ausgehend von einer PTFE-Dispersion gebildet wurde, der Reibwert und der sich einstellende Verschleiß niedriger ist als bei einem Gleitlagerverbundwerkstoff, bei dem das Gleitschichtmaterial aus einer pulverförmigen Mischung der Komponenten PVDF, PTFE und der vorzugsweise vorgesehenen Füllstoffe hergestellt ist, die dann als solche in und auf die poröse Trägerschicht aufgestreut und unter Ausübung von Druck und Zuführung von Wärme in die Trägerschicht einimprägniert wurde. - Wenn vorstehend von pulverförmigem PVDF die Rede ist, so werden hierunter aus PVDF bestehende Partikel oder auch Partikel auf Basis von PVDF verstanden, die weitere Füllstoffe beinhalten, die in dem matrixbildenden PVDF aufgenommen sind. Man spricht hier von Füllstoffen in compoundierter Form entsprechend der Offenbarung in EP 2 532 905 A1. Dies wird darauf zurückgeführt, dass bei der Herstellung einer prüf rohrförmigen Mischung sehr viel Energie zur Zerkleinerung und Vermischung von PTFE und PVDF eingeleitet werden muss, was zu einer Schädigung des PTFE führen kann, insbesondere kann dies zu einer in diesem Stadium nicht erwünschten Versinterung des PTFE führen. Dies behindert wiederum die Herstellung eines fein homogenen Gleitschichtmaterials. Ausgehend von einer PTFE Dispersion mit PTFE des beanspruchten Molekulargewichts kann PVDF Pulver und die gegebenenfalls vorgesehenen weiteren Füllstoffe auf schonende Weise untergemischt werden, und es kann eine homogene Mischung erreicht werden, ohne dass das PTFE geschädigt wird.

Man unterscheidet auf dem hier in Rede stehenden Gebiet verschiedene Klassen von Gleitlagerverbundwerkstoffen. Man kennt zum einen Gleitlagerverbundwerkstoffe, bei denen das Gleitschichtmaterial auf Polymerbasis PTFE-basiert ist. Solche Werkstoffe sind seit langem bekannt, und PTFE ist diejenige Polymerbasis, welche die geringsten Reibwerte überhaupt aufweist. Allerdings würde ein Gleitlagerverbundwerkstoff der hier in Rede stehenden Art mit einem aus 100% PTFE bestehenden Gleitschichtmaterial nicht den Verschleißfestigkeitsanforderungen der Praxis genügen können. Daher war man seit jeher bestrebt, ein PTFE-basiertes Gleitschichtmaterial mit verschleißmindernden Füllstoffen zu versehen. Hierfür wurden sowohl metallische Füllstoffe, Metallsulfide, Fasern bestimmter Art (Glas, Aramid, Kohlenstoff) als auch andere verschleißmindernde Füllstoffe vorgeschlagen. Hierbei besteht der Zielkonflikt, dass verschleißmindernde Füllstoffe wiederum den Reibwert auf mitunter nicht akzeptable Größe erhöhen.

Im Stand der Technik sind aber andererseits auch Gleitlagerverbundwerkstoffe bekannt, bei denen das Gleitschichtmaterial aus einem tragenden, meist thermoplastischen Polymer, insbesondere PVDF, PEEK u.a. als Basis gebildet ist. Derartige Gleitlagerverbundwerkstoffe haben zwar insbesondere unter Beifügung tribologisch wirksamer Füllstoffe mitunter eine sehr gute Verschleißbeständigkeit, jedoch ist ihr Reibwert für viele Anwendungen zu hoch.

Im Zuge der Produktentwicklung kommt - wie die Erfahrung zeigt - erschwerend hinzu, dass sich die Gleitschichtmaterialien nicht in vorherbestimmbarer Weise konzipieren lassen, sondern dass es sehr häufig zu unerwarteten und unerwartbaren Ergebnissen und Eigenschaften der konzipierten Werkstoffe kommt. So führt beispielsweise die Erhöhung eines PTFE-Füllstoffgehalts von 10 auf 30 Vol.-% ausgehend von einem 77 Vol.-% umfassenden PVDF-Basis-Gleitschichtmaterial nicht wie erwartet zu einer Reduzierung, sondern zu einer deutlichen Erhöhung des Reibwerts. Andererseits ist es schwer nachvollziehbar, dass ausgehend von einem anderen PTFE-Basiswerkstoff mit 75 Vol.-% PTFE und als Rest tribologisch wirksame Füllstoffe die Reduzierung des PTFE-Gehalts auf 60 Vol.-% und die Zugabe von 20 Vol.-% PVDF zu einer über 30%-igen Erhöhung des Verschleißes geführt hat (für beides werden an späterer Stelle Messdaten genannt werden).

Trotz der vorausgehend geschilderten Erfahrungen wurde erfindungsgemäß festgestellt, dass die Herstellung eines Gleitschichtmaterials ausgehend von einer PTFE-Dispersion durch Zugabe von pulverförmigem PVDF zu der PTFE-Dispersion in dem beanspruchten Umfang zu einem unerwartet positiven Ergebnis führte. Während ein Werkstoff mit nur 20 Vol.-% PVDF einen höheren Verschleiß aufwies als ein Werkstoff ohne PVDF mit höherem PTFE-Gehalt, zeichnete sich die Zugabe von 40 bis 60 Vol.-% PVDF als in hohem Maße verschleißmindernd aus, wobei es zudem überraschte, dass der Reibwert gegenüber Werkstoffen mit sehr viel höherem PTFE-Gehalt nicht oder kaum erhöht ist.

Bei einer weiteren Ausführungsform des erfindungsgemäßen Gleitlagerverbundwerkstoffs erweist es sich als vorteilhaft, wenn das Gleitschichtmaterial wenigstens 45 Vol.-%, insbesondere wenigstens 50 Vol.-%, insbesondere höchstens 65 Vol.-%, insbesondere höchstens 60 Vol.-% PVDF umfasst.

Weiter erweist es sich als vorteilhaft, wenn das Gleitschichtmaterial wenigstens 32 Vol.-%, insbesondere wenigstens 35 Vol.-%, insbesondere wenigstens 40 Vol.-%, insbesondere wenigstens 45 Vol.-% PTFE und insbesondere höchstens 55 Vol.-%, insbesondere höchstens 50 Vol.-%, insbesondere höchstens 48 Vol.-%, insbesondere höchstens 45 Vol.-% PTFE umfasst.

Im Hinblick auf eine weitergehende Optimierung der tribologischen Eigenschaften erweist es sich als vorteilhaft, wenn das Gleitschichtmaterial wenigstens 0,2 Vol.-%, insbesondere wenigstens 0,5 Vol.-%, insbesondere wenigstens 1,0 Vol.-%, insbesondere wenigstens 2 Vol.-%, insbesondere wenigstens 5 Vol.-%, insbesondere höchstens 15 Vol.-%, insbesondere höchstens 12 Vol.-%, insbesondere höchstens 10 Vol.-% tribologisch wirksame Füllstoffe umfasst. Insbesondere erweist es sich als vorteilhaft, wenn die Füllstoffe Zinksulfid (ZnS), Bariumsulfat (BaSO₄) und/oder Molybdändisulfid (MoS₂₎ und/oder Pigmente, wie TiO₂, hexagonales BN, WS₂, SnS₂, Bi₂S₃, CaF₂, Calciumphosphate, Aramid und Polyimid (PI)und/oder Fasern, insbesondere Kohlenstofffasern, umfassen.

Es erweist sich als vorteilhaft, wenn der die Gleitfläche bildende Überstand des Gleitschichtmaterials über die poröse Trägerschicht ein Dicke von wenigstens 5 µm, insbesondere von wenigstens 10 µm, insbesondere von wenigstens 50 µm und von höchstens 60 µm, insbesondere von höchstens 50 µm, insbesondere von höchstens 45 µm aufweist.

Gegenstand der vorliegenden Erfindung ist auch ein Verfahren zum Herstellen eines Gleitlagerverbundwerkstoffs mit den Merkmalen des Anspruchs 7. Bevorzugte Weiterbildungen des Verfahrens sind Gegenstand der Ansprüche 8 bis 12. Außerdem wird Schutz in Anspruch genommen für ein Gleitlagerelement mit den Merkmalen des Anspruchs 13 bzw. 14.

Als erfindungsgemäß wird auch angesehen ein Gleitlagerverbundwerkstoff mit einer metallischen Stützschicht, einer darauf aufgebrachten porösen Trägerschicht und mit einer eine Gleitfläche für einen Gleitpartner bildenden Gleitschicht aus einem Gleitschichtmaterial auf Polymerbasis, welches in die poröse Trägerschicht einimprägniert ist und einen die Gleitfläche bildenden Überstand über die poröse Trägerschicht bildet, wobei das Gleitschichtmaterial tribologisch wirksame Füllstoffe umfassen kann, wobei die Polymerbasis des Gleitschichtmaterials PTFE und einen niedrigschmelzenden Thermoplasten mit einer Schmelztemperatur von 160 - 190 °C umfasst, wobei der Gleitlagerverbundwerkstoff dadurch gekennzeichnet ist, dass das Gleitschichtmaterial 30 - 60 Vol.% PTFE und 40 - 70 Vol.-% des niedrigschmelzenden Thermoplasten umfasst, und dass das Gleitschichtmaterial ausgehend von einer PTFE-Dispersion mit einem Molekulargewicht von PTFE > 10⁷ g/mol gebildet wurde, welcher der niedrigschmelzende pulverförmige Fluorthermoplast und die gegebenenfalls vorgesehenen Füllstoffe zugesetzt wurden, wobei das PTFE dann ausgefällt und eine flüssige Phase der Dispersion abgetrennt wurde und ein das ausgefällte PTFE, den niedrigschmelzenden Fluorthermoplasten und die gegebenenfalls zugesetzten Füllstoffe umfassendes verbleibendes Gemisch zur Bildung des Gleitschichtmaterials in die poröse Trägerschicht einimprägniert und unter Zufuhr von Wärme darin fixiert wurde. Der niedrigschmelzende Fluorthermoplast kann von PVDF, ETFE und/oder CETFE gebildet sein oder diese Thermoplasten umfassen. Er kann weitergebildet werden durch Merkmale der Patentansprüche 3-6.

Weitere Merkmale, Einzelheiten und Vorteile der Erfindung ergeben sich aus den beigefügten Patentansprüchen und aus der zeichnerischen Darstellung und nachfolgenden Beschreibung bevorzugter Ausführungsformen der Erfindung.

In der Zeichnung zeigt:
Figur 1 eine schematische Schnittansicht eines erfindungsgemäßen Gleitlagerverbundwerkstoffs;
Figur 2 Ergebnisse einer Haftreibungsmessung;
Figur 3 Ergebnisse einer Verschleißmessung und
Figur 4 eine schematische Darstellung einer Prüfanordnung
Figuren 5a, b zwei von je einem mikroskopisch betrachteten Schliff eines Gleitlagerverbundwerkstoffs abgezeichnete Darstellungen (Figur 5a erfindungsgemäß, Figur 5b nicht erfindungsgemäß).

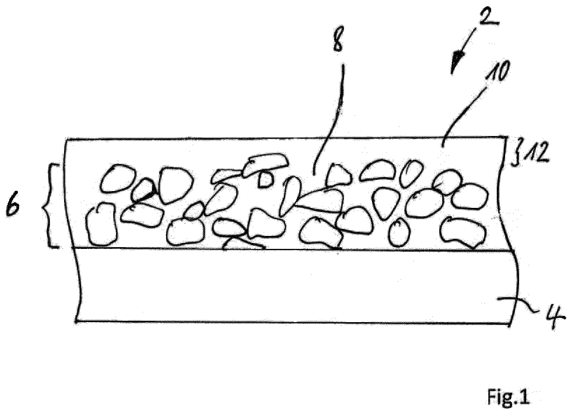

Figur 1 zeigt einen insgesamt mit dem Bezugszeichen 2 bezeichneten Gleitlagerverbundwerkstoff mit einer metallischen Stützschicht 4 aus Stahl und einer metallischen porösen Trägerschicht 6, insbesondere aus Bronze, die ein Porenvolumen bezogen auf das Volumen der Trägerschicht von vorzugsweise wenigstens 20 Vol-%, insbesondere wenigstens 25 Vol.-% insbesondere wenigstens 30 Vol.-%, insbesondere wenigstens 40 Vol.-% begrenzt. In die Poren der porösen Trägerschicht 6 ist ein Gleitschichtmaterial 8 auf Polymerbasis eingebracht, welches nicht nur die Poren der Trägerschicht 6 vorzugsweise vollständig ausfüllt, sondern auch einen eine Gleitschicht 10 bildenden Überstand 12 über der porösen Trägerschicht 6 bildet.

Die Herstellung des in Figur 1 schematisch dargestellten Gleitlagerverbundwerkstoffs erfolgt nach dem eingangs beschriebenen erfindungsgemäßen Verfahren. Es wird also in eine zuvor und separat bereitgestellte flüssige PTFE-Dispersion pulverförmiges PVDF und optional weitere Füllstoffe zugegeben und eine homogene Mischung hergestellt. Währenddessen oder danach wird das PTFE in an sich bekannter Weise ausgefällt. Von der so erhaltenen Mischung wird eine flüssige Phase der Dispersion abgetrennt und ein das ausgefällte PTFE, das PVDF und die gegebenenfalls zugesetzten Füllstoffe umfassendes verbleibendes Gemisch erhalten. Dieses wird zur Bildung des Gleitschichtmaterials dann in die poröse Trägerschicht eingebracht und darin thermisch fixiert, so dass die beanspruchte Zusammensetzung des Gleitschichtmaterials resultiert. Dabei wird auch eine noch enthaltene Restfeuchte und Rückstände von Benetzungsmitteln verdampft.

Die nachfolgende Tabelle zeigt erfindungsgemäße Zusammensetzungen des Gleitschichtmaterials (Beispiele 3, 4 und 5) zur Herstellung eines erfindungsgemäßen Gleitlagerverbundwerkstoffs und Vergleichsbeispiele hierzu (Beispiele 1, 2 und 6 bis 8).

**Tabelle 1 - Ausführungsbeispiele**

| **Beispiel** | **Matrix [Vol.-%]** | | **Füllstoff [Vol.-%]** | | | | | | |
|---|---|---|---|---|---|---|---|---|---|
| | **PTFE** | **PVDF** | **PVDF** | **PTFE** | **PFA** | **ZnS** | **BaSO₄** | **CF** | **Blei** |
| **1** | **75** | | | | **5** | **17** | | **3** | |
| **2** | **60** | | **20** | | | | | | **20** |
| **3** | **60** | | **40** | | | | | | |
| **4** | **50** | | **50** | | | | | | |
| **5** | **40** | | **60** | | | | | | |
| **6** | | **77** | | **10** | | | **10** | **3** | |
| **7** | | **70** | | **30** | | | | | |
| **8** | | **55** | | **30** | | | **15** | | |

Bei den Beispielen 6 bis 8 wurde hingegen aus allen Komponenten eine Pulvertrockenmischung hergestellt. Diese wurde auf eine Stützschicht aus Stahl mit einer porös aufgesinterten Trägerschicht aus Bronze aufgestreut, unter Temperatur erschmolzen und in die Poren der Trägerschicht eingewalzt.

Aus diesen streifenförmigen Flachmaterialien wurden in einem Biegerollverfahren zylindrische Buchsen mit einer Stoßfuge hergestellt, die dann wie nachfolgend beschrieben getestet wurden.

### Beschreibung der Prüfung:

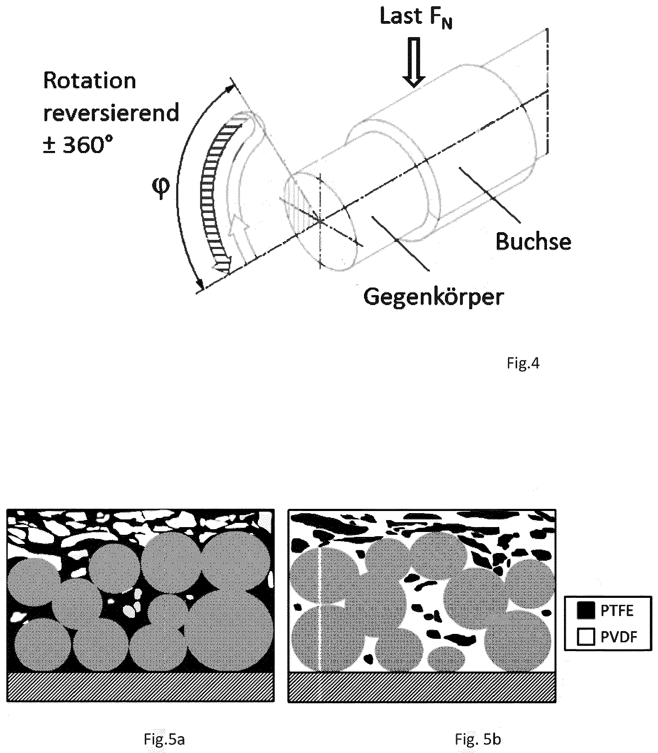

Der Verschleiß der Gleitlager wurde in einem fettgeschmierten Lauf mit reversierender Rotationsbewegung mit mittlerer Geschwindigkeit von 0,054 m/s getestet, während für die Haftreibungsmessung eine mittlere Geschwindigkeit von 0,057 m/s verwendet wurde. Hierbei rotiert das buchsenförmige Gleitlagerelement nicht kontinuierlich, sondern es wird abwechselnd um jeweils eine volle Umdrehung hin und her, also in die eine Umfangsrichtung und wieder zurück und in die andere Umfangsrichtung und wieder zurück in Bezug auf den in der Öffnung angeordneten als Welle dargestellten Gegenkörper bewegt. Dieser Gegenkörper erstreckt sich in Umfangsrichtung des Buchseninnenumfangs nur über ein Winkelsegment von ca. 40° und ist gegen die radiale Kraftbeaufschlagung abgestützt. Die Anordnung ist schematisch in Figur 4 dargestellt. Hierbei wird also das buchsenförmige Gleitlagerelement gegenüber dem Gegenkörper hin und her rotierend angetrieben. Dabei wird die Gleitlagerbuchse in radialer Richtung unter einer Federvorspannung mit einer Kraft F_{N} von 1500 N belastet.

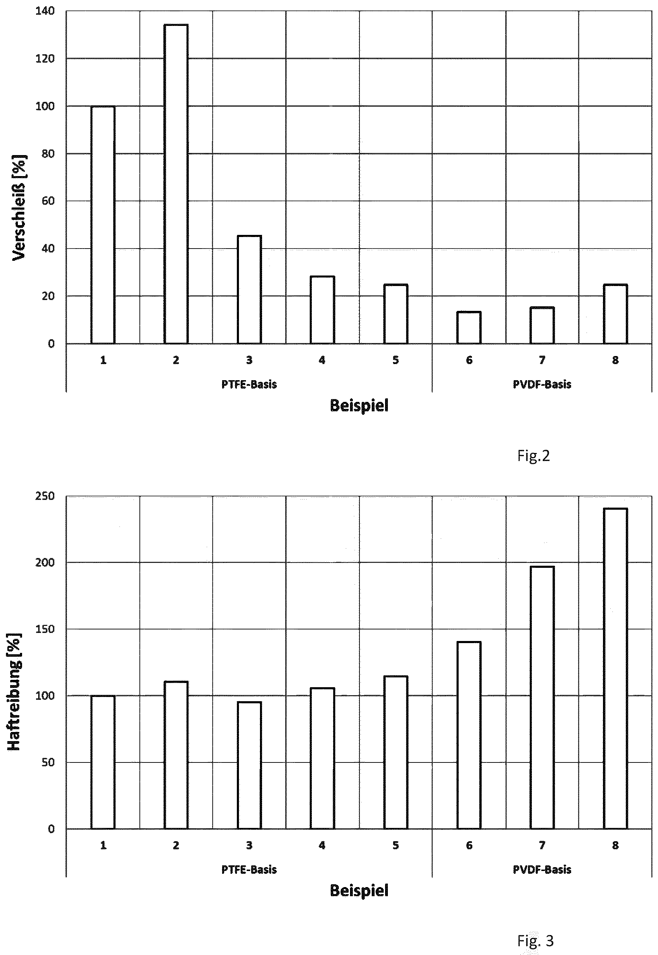

Die buchsenförmigen Gleitlagerelemente mit Gleitschichtmaterial gemäß Tabelle 1 wurden unter jeweils gleichen Bedingungen getestet. Für die Verschleißmessung wurde der reversierende Rotationsbetrieb über 20 Stunden ausgeführt und es wurde dann der jeweilige Verschleiß des Gleitschichtmaterials an der Buchseninnenseite gemessen und in der Figur 2 in relativen Einheiten aufgetragen.

Für die Messung der Haftreibung wird das jeweilige buchsenförmige Gleitlagerelement innerhalb des Prüfstands mit der vorgegebenen Last F_{N} für 20 Minuten beaufschlagt. Im Anschluss hieran wurde eine Reibwertmessung mittels Drehmomenterfassung ausgehend vom Stillstand, also eine Haftreibungsmessung, ausgeführt, deren Ergebnisse wiederum in relativen Einheiten in Figur 3 aufgetragen sind.

Die Gleitschichtmaterialien auf PVDF-Basis, Nummern 6 bis 8, zeigen eine ausgezeichnete Verschleißbeständigkeit. Jedoch ist der Reibwert, und zwar insbesondere die Haftreibung, zu hoch. Sie liegt deutlich oberhalb der Haftreibung von PTFE-Basis-Gleitschichtmaterialien (Beispiele 1 und 2). Um den Reibwert hier ausgehend von Vergleichsbeispiel Nummer 6 zu reduzieren, wurde mit Vergleichsbeispiel Nummer 7 der Versuch unternommen, den PTFE-Gehalt auf 30 Vol.-% zu erhöhen, um damit die Haftreibung zu reduzieren. Es wurde erwartet, dass die verstärkte Zugabe von PTFE als hervorragendem reibwerterniedrigendem Festschmierstoff eine deutliche Reduzierung der Haftreibung würde bewirken können. Dies war aber nicht der Fall, wie Haftreibungsdiagramm gemäß Figur 3 zeigt.

Die PTFE-Basis-Gleitschichtmaterialien gemäß Nummern 1 bis 5 zeigen unter den vorliegenden Prüfbedingungen ein hinreichendes zufriedenstellendes Haftreibungsverhalten, was primär auf die PTFE-Basis zurückzuführen ist. Bei diesen PTFE-Basis-Gleitschichtmaterialien dienen die in der Tabelle 1 aufgeführten Füllstoffe nicht primär zur Reduzierung des Reibwerts, sondern in erster Linie zur Erhöhung der Verschleißbeständigkeit.

Bei einem reinen zu 100% aus PTFE bestehenden Gleitschichtmaterial wären - wie eingangs schon erwähnt - der Reibwert und insbesondere die Haftreibung geringer als bei den Werkstoffen gemäß Nr. 1 bis 5. Sie wären für Anwendungen, bei denen ein gutes "Slip/Stick"-Verhalten, also ein geringer Unterschied zwischen Haftreibung und Gleitreibung gefordert ist, am besten geeignet; jedoch wäre der Haftreibwert von 100 % PTFE für eine häufig geforderte Selbsthemmung, z.B. in Sitzverstellvorrichtungen, zu gering.

Bei einem PTFE-Basiswerkstoff führt die Zugabe von Füllstoffen, zu einer Erhöhung der Haftreibung und hoffentlich zu einer Verbesserung der Verschleißfestigkeit verglichen zum reinen PTFE-Gleitschichtmaterial. Trotz der Zugabe der verschleißmindernden Füllstoffe bei Beispielen Nr. 1 und 2 ist die Verschleißbeständigkeit aber für viele Anwendungen nicht hinreichend.

Die Zugabe von mindestens 40 Vol.-% PVDF in Pulverform (erfindungsgemäße Beispiele 3 bis 5) zu einer PTFE Dispersion führte zu einem Werkstoff mit einer signifikanten Reduzierung des Verschleißes, und zwar bis auf das Niveau der PVDF-Basiswerkstoffe. Überraschenderweise führte der sehr hohe Anteil an PVDF (40 bis 60 Vol.-%) zu keiner nennenswerten Erhöhung des Haftreibungsniveaus, sondern die Reibung blieb auf dem Niveau der PTFE-basierten Materialien (Beispiele 1 bis 2). Da PVDF einen deutlich höheren Reibwert als PTFE aufweist, war dies eher nicht zu erwarten.

Da auch die Beispiele 6 bis 8 mit einer PVDF-Matrix mit 55 - 77 Vol.-% PVDF einen mit zunehmendem PVDF Gehalt steigenden Reibwert in Form des Haftreibungswerts aufweisen, konnte nicht von einem gleichbleibend guten Haftreibwert bei höheren PVDF-Anteilen in PTFE basierten Gleitschichtmaterialien ausgegangen werden, was sich aber bei den Beispielen 3 bis 5 dennoch einstellte.

Die gleichzeitig niedrige Haftreibung und die hohe Verschleißfestigkeit von Werkstoffen mit aus einer PTFE-Dispersion gebildeten PTFE-Basis mit der Dispersion zugegebenem PVDF-Pulver werden vermutlich durch das einzigartige Werkstoffgefüge mit einem Zusammenspiel zwischen netzartigen PTFE-Strukturen und geschmolzenen, teilweise zusammengebundenen PVDF-Partikeln, die darin wie in einer Matrix aufgenommen sind, hervorgerufen.

Der erfindungsgemäße Gleitlagerverbundwerkstoff gemäß den Beispielen Nummern 3 bis 5 erweist sich als gut geeignet zur Herstellung von Gleitlagerelementen in Form von gerollten Buchsen und Bundbuchsen, insbesondere zur Verwendung in Sitzverstellvorrichtungen, insbesondere bei Kraftfahrzeugen, da hier durch Stick-Slip unerwünschte Geräusche entstehen können, die aber bei Verwendung des erfindungsgemäßen Gleitlagerverbundwerkstoffs nicht oder in geringerem Umfang auftreten.

Schließlich zeigen die Figuren 5a, b nachgezeichnete Schliffbilder von einem erfindungsgemäßen Werkstoff (Figur 5a) und einem nicht erfindungsgemäßen Werkstoff (Figur 5b). Der erfindungsgemäße Werkstoff (Figur 5a) wurde in der vorausgehend beschriebenen erfindungsgemäßen Weise ausgehend von einer PTFE-Dispersion mit einem Molekulargewicht von PTFE > 5*10⁶ g/mol hergestellt, der pulverförmiges PVDF beigegeben wurde. Nach Ausfällen des PTFE und anschließendem Abtrennen einer flüssigen Phase der Dispersion wurde das verbleibende Gemisch bei ungefähr Raumtemperatur in die dreidimensional poröse Trägerschicht aus gesinterter Bronze eingewalzt und im eingewalzten Zustand dann bei ca. 380° Wärme behandelt. Bei der schwarz ausgezeichneten Phase handelt es sich um PTFE, und bei den weiß ausgezeichneten Ausscheidungen handelt es sich um PVDF. Man erkennt eine Anreicherung von PVDF in Richtung zur Oberseite des Gleitlagerverbundwerkstoffs, also zum Gleitpartner hin, während das bei dieser Verfahrensweise matrixbildende PTFE bevorzugt in die Poren der Trägerschicht einimprägniert wird. Bei dem nicht erfindungsgemäßen Werkstoff (Figur 5b) wurde eine pulverförmige Mischung aus pulverförmigem PVDF und pulverförmigem PTFE hergestellt und auf die dreidimensional poröse Trägerschicht aufgestreut. Sodann wurde das auf gestreute Pulvergemisch auf Temperaturen zwischen 170 - 220 °C erwärmt und in die dreidimensional poröse Trägerschicht eingewalzt. Dabei erweicht das PVDF, und es wird bevorzugt das aufgrund der Verfahrensweise dann matrixbildende PVDF in die Poren der Trägerschicht einimprägniert. Im Unterschied zu Figur 5a erkennt man in Figur 5b daher eine Anreicherung von PTFE zur Oberseite des Werkstoffs hin.

## Patentansprüche

1. Gleitlagerverbundwerkstoff (2) mit einer metallischen Stützschicht (4), einer darauf aufgebrachten porösen Trägerschicht (6), insbesondere aus Bronze, und mit einer eine Gleitfläche für einen Gleitpartner bildenden Gleitschicht (10) aus einem Gleitschichtmaterial (8) auf Polymerbasis, welches in die poröse Trägerschicht (6) einimprägniert ist und einen die Gleitfläche bildenden Überstand (12) über die poröse Trägerschicht (6) bildet, wobei die Polymerbasis des Gleitschichtmaterials (8) PVDF und PTFE umfasst, und wobei das Gleitschichtmaterial (8) weitere tribologisch wirksame Füllstoffe umfassen kann, wobei das Gleitschichtmaterial (8) 30 - 60 Vol.% PTFE und 40 - 70 Vol.-% PVDF umfasst, und dass das Gleitschichtmaterial (8) ausgehend von einer PTFE-Dispersion mit einem Molekulargewicht von PTFE > 5*10⁶ g/mol gebildet wurde, welcher pulverförmiges PVDF und die gegebenenfalls vorgesehenen Füllstoffe zugesetzt wurden, wobei das PTFE dann ausgefällt und eine flüssige Phase der Dispersion abgetrennt wurde und ein das ausgefällte PTFE, das PVDF und die gegebenenfalls zugesetzten Füllstoffe umfassendes verbleibendes Gemisch zur Bildung des Gleitschichtmaterials in die poröse Trägerschicht (6) einimprägniert und unter Zufuhr von Wärme darin fixiert wurde.

2. Gleitlagerverbundwerkstoff nach Anspruch 1, **dadurch gekennzeichnet, dass** das Gleitschichtmaterial (8) wenigstens 45 Vol.-%, insbesondere wenigstens 50 Vol.-%, insbesondere höchstens 65 Vol.-%, insbesondere höchstens 60 Vol.-% PVDF umfasst.

3. Gleitlagerverbundwerkstoff nach Anspruch 1 oder 2, **dadurch gekennzeichnet, dass** das Gleitschichtmaterial (8) wenigstens 32 Vol.-%, insbesondere wenigstens 35 Vol.-%, insbesondere wenigstens 40 Vol.-%, insbesondere wenigstens 45 Vol.-% PTFE und insbesondere höchstens 55 Vol.-%, insbesondere höchstens 50 Vol.-%, insbesondere höchstens 48 Vol.-%, insbesondere höchstens 45 Vol.-% PTFE umfasst.

4. Gleitlagerverbundwerkstoff nach Anspruch 1, 2 oder 3, **dadurch gekennzeichnet, dass** das Gleitschichtmaterial (8) wenigstens 0,2 Vol.-%, insbesondere wenigstens 0,5 Vol.-%, insbesondere wenigstens 1,0 Vol.-%, insbesondere wenigstens 2 Vol.-%, insbesondere wenigstens 5 Vol.-%, insbesondere höchstens 15 Vol.-%, insbesondere höchstens 12 Vol.-%, insbesondere höchstens 10 Vol.-% tribologisch wirksame Füllstoffe außer PTFE oder PVDF umfasst.

5. Gleitlagerverbundwerkstoff nach einem oder mehreren der vorstehenden Ansprüche, **dadurch gekennzeichnet, dass** die Füllstoffe Zinksulfid (ZnS), Bariumsulfat (BaSO₄) und/oder Molybdändisulfid (MoS₂₎ und/oder Pigmente, wie TiO₂, und/oder hexagonales BN, WS₂, SnS₂, Bi₂S₃, CaF₂, Calciumphosphate, Aramid und Polyimid (PI) und/oder Fasern, insbesondere Kohlenstofffasern, umfassen.

6. Gleitlagerverbundwerkstoff nach einem oder mehreren der vorstehenden Ansprüche, **dadurch gekennzeichnet, dass** der die Gleitfläche bildende Überstand (12) des Gleitschichtmaterials (8) über die poröse Trägerschicht (6) ein Dicke von wenigstens 5 µm, insbesondere von wenigstens 10 µm, insbesondere von wenigstens 50 µm und von höchstens 60 µm, insbesondere von höchstens 50 µm, insbesondere von höchstens 45 µm aufweist.

7. Verfahren zum Herstellen eines Gleitlagerverbundwerkstoffs (2) nach einem oder mehreren der vorstehenden Ansprüche, mit einer metallischen Stützschicht (4), einer darauf aufgebrachten porösen Trägerschicht (6), insbesondere aus Bronze, und mit einer eine Gleitfläche für einen Gleitpartner bildenden Gleitschicht (10) aus einem Gleitschichtmaterial (8) auf Polymerbasis, welches in die poröse Trägerschicht (6) einimprägniert ist und einen die Gleitfläche bildenden Überstand (12) über die poröse Trägerschicht (6) bildet, wobei das Gleitschichtmaterial (8) 30 - 60 Vol.-% PTFE und 40 - 70 Vol.-% PVDF als Polymerbasis umfasst und wobei das Gleitschichtmaterial (8) weitere tribologisch wirksame Füllstoffe umfassen kann, die folgenden Schritte umfassend:
Bereitstellen einer PTFE-Dispersion mit einem Molekulargewicht von PTFE > 5*10⁶ g/mol, Bereitstellen von pulverförmigem PVDF,
Zugeben des pulverförmigen PVDF und der optional vorgesehenen weiteren Füllstoffe, ausgenommen PTFE und PVDF, zu der PTFE-Dispersion und Herstellen einer homogenen Mischung,
Ausfällen des PTFE und anschließendes Abtrennen einer flüssigen Phase der Dispersion und Erhalt eines das ausgefällte PTFE, das PVDF und die gegebenenfalls zugesetzten Füllstoffe umfassenden verbleibenden Gemischs,
Einimprägnieren des Gemischs in die poröse Trägerschicht und Zuführen von Wärme zur Fixierung des Gemischs in der porösen Trägerschicht (6) zur Bildung des Gleitschichtmaterials (8).

8. Verfahren nach Anspruch 7, **dadurch gekennzeichnet, dass** das Bereitstellen der PTFE-Dispersion und das Zugeben des pulverförmigen PVDF und der optional vorgesehenen weiteren Füllstoffe zu der PTFE-Dispersion und das Herstellen einer homogenen Mischung derart ausgeführt wird, dass das Gleitschichtmaterial (8) wenigstens 45 Vol.-%, insbesondere wenigstens 50 Vol.-%, insbesondere höchstens 65 Vol.-%, insbesondere höchstens 60 Vol.-% PVDF umfasst.

9. Verfahren nach Anspruch 7 oder 8, **dadurch gekennzeichnet, dass** das Bereitstellen der PTFE-Dispersion und das Zugeben des pulverförmigen PVDF und der optional vorgesehenen weiteren Füllstoffe zu der PTFE-Dispersion und das Herstellen einer homogenen Mischung derart ausgeführt wird, dass das Gleitschichtmaterial (8) wenigstens 32 Vol.-%, insbesondere wenigstens 35 Vol.-%, insbesondere wenigstens 40 Vol.-%, insbesondere wenigstens 45 Vol.-% PTFE und insbesondere höchstens 55 Vol.-%, insbesondere höchstens 50 Vol.-%, insbesondere höchstens 48 Vol.-%, insbesondere höchstens 45 Vol.-% PTFE umfasst.

10. Verfahren nach Anspruch 7, 8 oder 9, **dadurch gekennzeichnet, dass** das Bereitstellen der PTFE-Dispersion und das Zugeben des pulverförmigen PVDF und der optional vorgesehenen weiteren Füllstoffe zu der PTFE-Dispersion und das Herstellen einer homogenen Mischung derart ausgeführt wird, dass das Gleitschichtmaterial (8) wenigstens 0,2 Vol.-%, insbesondere wenigstens 0,5 Vol.-%, insbesondere wenigstens 1,0 Vol.-%, insbesondere wenigstens 2 Vol.-%, insbesondere wenigstens 5 Vol.-%, insbesondere höchstens 15 Vol.-%, insbesondere höchstens 12 Vol.-%, insbesondere höchstens 10 Vol.-% tribologisch wirksame Füllstoffe außer PTFE oder PVDF umfasst.

11. Verfahren nach einem oder mehreren der vorstehenden Ansprüche 7-10, **dadurch gekennzeichnet, dass** die Füllstoffe Zinksulfid (ZnS), Bariumsulfat (BaSO₄) und/oder Molybdändisulfid (MoS₂₎ und/oder Pigmente, wie TiO₂, und/oder hexagonales BN, WS₂, SnS₂, Bi₂S₃, CaF₂, Calciumphosphate, Aramid und Polyimid (PI) und/oder Fasern, insbesondere Kohlenstofffasern, umfassen.

12. Verfahren nach einem oder mehreren der vorstehenden Ansprüche 7-11, **dadurch gekennzeichnet, dass** der die Gleitfläche bildende Überstand (12) des Gleitschichtmaterials (8) über die poröse Trägerschicht (6) mit einer Dicke von wenigstens 5 µm, insbesondere von wenigstens 10 µm, insbesondere von wenigstens 50 µm und von höchstens 60 µm, insbesondere von höchstens 50 µm, insbesondere von höchstens 45 µm ausgebildet wird.

13. Gleitlagerelement, insbesondere gerollte Buchse oder Bundbuchse, insbesondere als Gleitlagerelement in einer Sitzverstellvorrichtung eines Kraftfahrzeugs, hergestellt aus einem Gleitlagerverbundwerkstoff (2) nach einem oder mehreren der Ansprüche 1-6.

14. Gleitlagerelement in Form einer gerollten Buchse oder Bundbuchse in einer Sitzverstellvorrichtung eines Kraftfahrzeugs, hergestellt aus einem Gleitlagerverbundwerkstoff (2) nach einem oder mehreren der Ansprüche 1-6.

## Claims

1. Plain bearing composite material (2) comprising a metal support layer (4), a porous carrier layer (6) applied thereto, in particular made of bronze, and comprising a sliding layer (10) forming a sliding surface for a sliding partner and made of a polymer-based sliding-layer material (8) which is impregnated into the porous carrier layer (6) and forms a protrusion (12) above the porous carrier layer (6), the protrusion forming the sliding surface, wherein the polymer base of the sliding-layer material (8) comprises PVDF and PTFE, and wherein the sliding-layer material (8) may comprise further tribologically active fillers, wherein the sliding-layer material (8) comprises 30-60 vol.% PTFE and 40-70 vol.% PVDF, and in that the sliding-layer material (8) was formed from a PTFE dispersion with a molecular weight of PTFE > 5*10⁶ g/mol to which powdered PVDF and any provided fillers were added, wherein the PTFE was then precipitated out and a liquid phase of the dispersion was separated and a remaining mixture comprising the precipitated-out PTFE, the PVDF, and any added fillers was impregnated into the porous carrier layer (6) to form the sliding-layer material and fixed in position therein by supplying heat.

2. Plain bearing composite material according to claim 1, **characterized in that** the sliding-layer material (8) comprises at least 45 vol.%, in particular at least 50 vol.%, in particular at most 65 vol.%, in particular at most 60 vol.% PVDF.

3. Plain bearing composite material according to claim 1 or 2,
**characterized in that** the sliding-layer material (8) comprises at least 32 vol.%, in particular at least 35 vol.%, in particular at least 40 vol.%, in particular at least 45 vol.% PTFE and in particular at most 55 vol.%, in particular at most 50 vol.%, in particular at most 48 vol.%, in particular at most 45 vol.% PTFE.

4. Plain bearing composite material according to claim 1, 2, or 3,
**characterized in that** the sliding-layer material (8) comprises at least 0.2 vol.%, in particular at least 0.5 vol.%, in particular at least 1.0 vol.%, in particular at least 2 vol.%, in particular at least 5 vol.%, in particular at most 15 vol.%, in particular at most 12 vol.%, in particular at most 10 vol.% tribologically active fillers apart from PTFE or PVDF.

5. Plain bearing composite material according to one or more of the preceding claims, **characterized in that** the fillers comprise zinc sulfide (ZnS), barium sulfate (BaSO₄), and/or molybdenum disulfide (MoS₂), and/or pigments, such as TiO₂, and/or hexagonal BN, WS₂, SnS₂, Bi₂S₃, CaF₂, calcium phosphates, aramid, and polyimide (PI), and/or fibers, in particular carbon fibers.

6. Plain bearing composite material according to one or more of the preceding claims, **characterized in that** the protrusion (12) of the sliding-layer material (8) that forms the sliding surface has a thickness of at least 5 µm, in particular at least 10 µm, in particular at least 50 µm and at most 60 µm, in particular at most 50 µm, in particular at most 45 µm above the porous carrier layer (6).

7. Method for producing a plain bearing composite material (2) according to one or more of the preceding claims, comprising a metal support layer (4), a porous carrier layer (6) applied thereto, in particular made of bronze, and comprising a sliding layer (10) forming a sliding surface for a sliding partner and made of a polymer-based sliding-layer material (8) which is impregnated into the porous carrier layer (6) and forms a protrusion (12) above the porous carrier layer (6), the protrusion forming the sliding surface, wherein the sliding-layer material (8) comprises 30-60 vol.% PTFE and 40-70 vol.% PVDF as the polymer base, and wherein the sliding-layer material (8) may comprise further tribologically active fillers, the method comprising the following steps:
providing a PTFE dispersion with a molecular weight of PTFE > 5*10⁶ g/mol,
providing powdered PVDF,
adding the powdered PVDF and the optionally provided further fillers, excluding PTFE and PVDF, to the PTFE dispersion and producing a homogeneous mixture,
precipitating out the PTFE and subsequently separating a liquid phase of the dispersion and obtaining a remaining mixture comprising the precipitated-out PTFE, the PVDF, and any added fillers,
impregnating the mixture into the porous carrier layer and supplying heat to fix the mixture in position in the porous carrier layer (6) to form the sliding-layer material (8).

8. Method according to claim 7, **characterized in that** the steps of providing the PTFE dispersion and adding the powdered PVDF and the optionally provided further fillers to the PTFE dispersion and producing a homogeneous mixture are carried out in such a way that the sliding-layer material (8) comprises at least 45 vol.%, in particular at least 50 vol.%, in particular at most 65 vol.%, in particular at most 60 vol.% PVDF.

9. Method according to claim 7 or 8, **characterized in that** the steps of providing the PTFE dispersion and adding the powdered PVDF and the optionally provided further fillers to the PTFE dispersion and producing a homogeneous mixture are carried out in such a way that the sliding-layer material (8) comprises at least 32 vol.%, in particular at least 35 vol.%, in particular at least 40 vol.%, in particular at least 45 vol.% PTFE and in particular at most 55 vol.%, in particular at most 50 vol.%, in particular at most 48 vol.%, in particular at most 45 vol.% PTFE.

10. Method according to claim 7, 8, or 9, **characterized in that** the steps of providing the PTFE dispersion and adding the powdered PVDF and the optionally provided further fillers to the PTFE dispersion and producing a homogeneous mixture are carried out in such a way that the sliding-layer material (8) comprises at least 0.2 vol.%, in particular at least 0.5 vol.%, in particular at least 1.0 vol.%, in particular at least 2 vol.%, in particular at least 5 vol.%, in particular at most 15 vol.%, in particular at most 12 vol.%, in particular at most 10 vol.% tribologically active fillers apart from PTFE or PVDF.

11. Method according to one or more of the preceding claims 7-10, **characterized in that** the fillers comprise zinc sulfide (ZnS), barium sulfate (BaSO₄), and/or molybdenum disulfide (MOS₂), and/or pigments, such as TiO₂, and/or hexagonal BN, WS₂, SnS₂, Bi₂S₃, CaF₂, calcium phosphates, aramid, and polyimide (PI), and/or fibers, in particular carbon fibers.

12. Method according to one or more of the preceding claims 7-11, **characterized in that** the protrusion (12) of the sliding-layer material (8) that forms the sliding surface is formed with a thickness of at least 5 µm, in particular at least 10 µm, in particular at least 50 µm and at most 60 µm, in particular at most 50 µm, in particular at most 45 µm above the porous carrier layer (6).

13. Plain bearing element, in particular a wrapped bush or flanged bush, in particular as a plain bearing element in a seat adjustment device of a motor vehicle, produced from a plain bearing composite material (2) according to one or more of claims 1-6.

14. Plain bearing element in the form of a wrapped bush or flanged bush in a seat adjustment device of a motor vehicle, produced from a plain bearing composite material (2) according to one or more of claims 1-6.

## Revendications

1. Matériau composite pour palier glissant (2) avec une couche de support métallique (4), une couche porteuse poreuse (6) déposée dessus, en particulier en bronze, et une couche de glissement (10) formant une surface de glissement pour un partenaire de glissement, constituée d'un matériau de couche de glissement (8) à base de polymère, lequel est imprégné dans la couche porteuse poreuse (6) et forme, en dépassant la couche porteuse poreuse (6), une surépaisseur (12) constituant la surface de glissement, la base polymère du matériau de couche de glissement (8) comprenant le PVDF et le PTFE, et le matériau de couche de glissement (8) pouvant en outre comprendre des charges tribologiques, le matériau de couche de glissement (8) comprenant 30 - 60 % en vol. de PTFE et 40 - 70 % en vol. de PVDF, et que le matériau de couche de glissement (8) a été formé à partir d'une dispersion de PTFE ayant un poids moléculaire de PTFE> 5*10⁶ g/mol, à laquelle du PVDF pulvérulent et, le cas échéant, les charges prévues ont été ajoutés, le PTFE ayant ensuite été précipité et une phase liquide de la dispersion séparée, et un mélange restant comprenant le PTFE précipité, le PVDF et les charges éventuellement ajoutées ayant été imprégné dans la couche porteuse poreuse (6) pour former le matériau de couche de glissement et y être fixé par apport de chaleur.

2. Matériau composite pour palier glissant selon la revendication 1, **caractérisé en ce que** le matériau de couche de glissement (8) comprend au moins 45 % en vol., en particulier au moins 50 % en vol., en particulier au plus 65 % en vol., en particulier au plus 60 % en vol. de PVDF.

3. Matériau composite pour palier glissant selon la revendication 1 ou 2, **caractérisé en ce que** le matériau de couche de glissement (8) comprend au moins 32 % en vol., en particulier au moins 35 % en vol., en particulier au moins 40 % en vol., en particulier au moins 45 % en vol. de PTFE et en particulier au plus 55 % en vol., en particulier au plus 50 % en vol., en particulier au plus 48 % en vol., en particulier au plus 45 % en vol. de PTFE.

4. Matériau composite pour palier glissant selon la revendication 1, 2 ou 3, **caractérisé en ce que** le matériau de couche de glissement (8) comprend au moins 0,2 % en vol., en particulier au moins 0,5 % en vol., en particulier au moins 1,0 % en vol., en particulier au moins 2 % en vol., en particulier au moins 5 % en vol., et en particulier au plus 15 % en vol., en particulier au plus 12 % en vol., en particulier au plus 10 % en vol. de charges tribologiques autres que le PTFE ou le PVDF.

5. Matériau composite pour palier glissant selon une ou plusieurs des revendications précédentes, **caractérisé en ce que** les charges comprennent le sulfure de zinc (ZnS), le sulfate de baryum (BaSO₄) et/ou le disulfure de molybdène (MoS₂) et/ou des pigments, tels que le TiO₂, et/ou le BN hexagonal, le WS₂, le SnS₂, le Bi2S₃, le CaF₂, des phosphates de calcium, de l'aramide et du polyimide (PI) et/ou des fibres, en particulier des fibres de carbone.

6. Matériau composite pour palier glissant selon une ou plusieurs des revendications précédentes, **caractérisé en ce que** la surépaisseur (12) du matériau de couche de glissement (8) qui forme la surface de glissement au-dessus de la couche porteuse poreuse (6) présente une épaisseur d'au moins 5 µm, notamment d'au moins 10 µm, notamment d'au moins 50 µm et d'au plus 60 µm, notamment d'au plus 50 µm, notamment d'au plus 45 µm.

7. Procédé de fabrication d'un matériau composite pour palier glissant (2) selon une ou plusieurs des revendications précédentes, avec une couche de support métallique (4), une couche porteuse poreuse (6) déposée dessus, en particulier en bronze, et avec une couche de glissement (10) formant une surface de glissement pour un partenaire de glissement, constituée d'un matériau de couche de glissement (8) à base de polymère, lequel est imprégné dans la couche porteuse poreuse (6) et forme une surépaisseur (12) formant la surface de glissement au-dessus de la couche porteuse poreuse (6), le matériau de couche de glissement (8) comprenant 30 - 60 % en vol. de PTFE et 40 -70 % en vol. de PVDF comme base polymère et pouvant éventuellement comprendre d'autres charges tribologiques, comprenant les étapes suivantes :
Fournir une dispersion de PTFE ayant un poids moléculaire de PTFE> 5*10⁶ g/mol,
Fournir du PVDF pulvérulent,
Ajouter le PVDF pulvérulent et les autres charges éventuellement prévues, autres que le PTFE et le PVDF, à la dispersion de PTFE et préparer un mélange homogène,
Précipitation du PTFE et séparation ultérieure d'une phase liquide de la dispersion et obtention d'un mélange résiduel comprenant le PTFE précipité, le PVDF et les charges éventuellement ajoutées,
Imprégnation du mélange dans la couche de support poreuse et apport de chaleur pour fixer le mélange dans la couche de support poreuse (6) en vue de former le matériau de couche de glissement (8).

8. Procédé selon la revendication 7, **caractérisé en ce que** la mise à disposition de la dispersion de PTFE, l'addition du PVDF pulvérulent et des éventuelles autres charges prévues dans la dispersion de PTFE, et la préparation d'un mélange homogène sont réalisés de manière que le matériau de couche de glissement (8) comprenne au moins 45 % en vol., en particulier au moins 50 % en vol., et au plus 65 % en vol., en particulier au plus 60 % en vol. de PVDF.

9. Procédé selon la revendication 7 ou 8, **caractérisé en ce que** la mise à disposition de la dispersion de PTFE, l'addition du PVDF pulvérulent et des éventuelles autres charges prévues dans la dispersion de PTFE, et la préparation d'un mélange homogène sont réalisés de manière que le matériau de couche de glissement (8) comprenne au moins 32 % en vol., en particulier au moins 35 % en vol., en particulier au moins 40 % en vol., en particulier au moins 45 % en vol. de PTFE, et au plus 55 % en vol., en particulier au plus 50 % en vol., en particulier au plus 48 % en vol., en particulier au plus 45 % en vol. de PTFE.

10. Procédé selon la revendication 7, 8 ou 9, **caractérisé en ce que** la mise à disposition de la dispersion de PTFE, l'addition du PVDF pulvérulent et des éventuelles autres charges prévues dans la dispersion de PTFE, et la préparation d'un mélange homogène sont réalisés de manière que le matériau de couche de glissement (8) comprenne au moins 0,2 % en vol., en particulier au moins 0,5 % en vol., en particulier au moins 1,0 % en vol., en particulier au moins 2 % en vol., en particulier au moins 5 % en vol., et au plus 15 % en vol., en particulier au plus 12 % en vol., en particulier au plus 10 % en vol. de charges tribologiques autres que le PTFE ou le PVDF.

11. Procédé selon une ou plusieurs des revendications précédentes 7-10, **caractérisé en ce que** les charges comprennent du sulfure de zinc (ZnS), du sulfate de baryum (BaSO₄) et/ou du disulfure de molybdène (MoS2) et/ou des pigments, comme le TiO₂, et/ou du nitrure de bore hexagonal (BN), WS₂, SnS₂, Bi₂S₃, CaF₂, des phosphates de calcium, de l'aramide et du polyimide (PI) et/ou des fibres, en particulier des fibres de carbone.

12. Procédé selon une ou plusieurs des revendications précédentes 7-11, **caractérisé en ce que** la surépaisseur (12) du matériau de couche de glissement (8) formant la surface de glissement au-dessus de la couche de support poreuse (6) est réalisée avec une épaisseur d'au moins 5 µm, en particulier d'au moins 10 µm, en particulier d'au moins 50 µm, et d'au plus 60 µm, en particulier d'au plus 50 µm, en particulier d'au plus 45 µm.

13. Élément de palier, en particulier manchon roulé ou manchon à bride, en particulier en tant qu'élément de palier dans un dispositif de réglage de siège d'un véhicule automobile, fabriqué à partir d'un matériau composite pour palier glissant (2) selon une ou plusieurs des revendications 1-6.

14. Élément de palier sous forme d'un manchon roulé ou d'un manchon à bride dans un dispositif de réglage de siège d'un véhicule automobile, fabriqué à partir d'un matériau composite pour palier glissant (2) selon une ou plusieurs des revendications 1-6.
